# FASCICULE DE BREVET EUROPEEN

(11) **EP 3 007 943 B1**
(45) Date de publication et mention de la délivrance du brevet: **30.08.2017**
(21) Numéro de dépôt: 14732134.3
(22) Date de dépôt: 13.06.2014
(51) Int. Cl.: B60S 1/48

(54) **PROCÉDÉ DE LAVAGE D'UNE VITRE D'UN VÉHICULE**
VERFAHREN ZUM WASCHEN EINER FAHRZEUGSCHEIBE
METHOD FOR WASHING A VEHICLE WINDOW

(30) Priorité: 14.06.2013 FR 1355550
(43) Date de publication de la demande: 20.04.2016
(73) Titulaire: Valeo Systèmes d'Essuyage, 78322 Le Mesnil Saint Denis (FR)
(72) Inventeur: GRASSO, Giuseppe, F-63340 Le Breuil sur Couze (FR); KOLANOWSKI, Grégory, F-43300 Siaugues-Saint-Romain (FR); NEGRE, Pierre-Emmanuel, F-75014 Paris (FR); TREBOUET, Marcel, F-78450 Chavenay (FR)
(74) Mandataire: Callu Danseux, Violaine
(86) Numéro de dépôt international: PCT/EP2014/062381
(87) Numéro de publication internationale: WO 2014/198895

(56) Documents cités:
- WO-A1-03/020559
- DE-A1-102005 031 721
- DE-A1-102008 052 063
- US-A1- 2012 056 004

## Description

Le domaine technique de la présente invention est celui des procédés de lavage d'une vitre d'un véhicule, notamment automobile en utilisant un système d'essuyage et de lavage de ladite vitre. Un tel système est plus particulièrement destiné à être installé sur un pare-brise du véhicule.

Les automobiles sont couramment équipées d'installation d'essuyage et de système de lavage pour assurer un essuyage et un lavage du pare-brise et éviter que la vision qu'a le conducteur de son environnement soit perturbée. Une telle installation comprend généralement deux balais d'essuyage qui raclent la surface extérieure du pare-brise de manière à évacuer l'eau présente sur cette surface.

Dans le but de laver le pare-brise, notamment en absence de pluie, de tels systèmes sont équipés d'un réservoir contenant un liquide nettoyant, dit premier liquide, d'un système de canalisation reliant le réservoir à des orifices par lesquels le premier liquide peut être éjecté sur le pare-brise, et d'une pompe apte à faire circuler le premier liquide dans le système de canalisation jusqu'à ce qu'il soit expulsé par les orifices sur le pare-brise.

Dans le but d'améliorer la qualité du nettoyage, notamment en cas de salissure importante du pare-brise, et/ou d'ajouter d'autres fonctions au système de nettoyage comme par exemple le dégivrage du pare-brise, il est connu de prévoir un deuxième réservoir contenant un liquide actif, dit deuxième liquide, ayant des propriétés de nettoyage supérieures et/ou des propriétés de dégivrage. De tels liquides actifs sont plus onéreux que les liquides nettoyants classiques.

Les deux réservoirs peuvent posséder chacun leur pompe mais sont reliés au même système de canalisation emmenant le premier et le deuxième liquides jusqu'aux orifices par lesquels ils sont éjectés sur le pare-brise. Ainsi, lorsque l'on veut passer de la projection d'un des liquides sur le pare-brise à la projection de l'autre des liquides, on désactive la pompe qui fonctionnait et on active l'autre pompe.

Un tel dispositif est décrit dans le document US2012056004 A1.

Un inconvénient vient du fait que, lorsque qu'une pompe est désactivée et que l'autre est activée, la pompe activée va faire circuler un premier liquide dans le système de canalisation, ce qui va entraîner le deuxième liquide resté dans le système jusqu'aux orifices d'éjection. Du deuxième liquide non désiré va donc être éjecté sur le pare-brise avant le premier liquide, ce qui n'est pas économique. En outre, si les balais d'essuyage sont mis en mouvement dès l'activation de la pompe, le premier liquide arrivera sur le pare-brise de manière décalée par rapport au fonctionnement des balais d'essuyage.

L'invention vise à résoudre au moins une partie de ces problèmes et concerne à cet effet un procédé de lavage d'un pare-brise de véhicule automobile par utilisation d'un dispositif de lavage comprenant :
- un premier réservoir contenant un premier fluide et un deuxième réservoir comprenant un deuxième fluide,
- un système de canalisation reliant le premier réservoir et le deuxième réservoir à des orifices par lesquels sont éjectés le premier fluide et/ou le deuxième fluide sur le pare-brise,
- un système de pompe destiné à faire circuler le premier fluide et/ou le deuxième fluide dans le système de canalisation jusqu'à éjection par lesdits orifices, et
- au moins un balai d'essuyage apte à se déplacer sur le pare-brise entre une position basse et une position haute,
caractérisé en ce que, le système de canalisation contenant du premier fluide, le procédé comprend les étapes :
a) d'activation du système de pompe de manière à faire circuler du deuxième fluide dans le système de canalisation de façon à purger le système de canalisation du premier fluide, et
b) désactivation du système de pompe au moment où le deuxième fluide arrive au niveau des orifices.

L'invention est particulièrement avantageuse car elle permet de s'assurer que le système de canalisation est rempli en deuxième fluide et que ce dernier sera éjecté sur le pare-brise du véhicule dès la prochaine activation du système de pompe, sans que du premier fluide ne soit éjecté avant ou avec le deuxième fluide. L'invention permet ainsi d'éviter d'éjecter du liquide non désiré et donc de gaspiller du liquide. L'invention permet en outre d'améliorer l'efficacité du nettoyage du pare-brise.

Le dispositif de lavage est ainsi réglé pour déterminer le moment où la purge est terminée, c'est-à-dire le moment où l'un des deux fluides a chassé l'autre fluide à l'extérieur du système de canalisation par éjection par les orifices. Ce réglage peut être réalisé par le contrôle et la gestion de plusieurs paramètres tels que le débit du système de pompe, la viscosité du premier et du deuxième fluide, la température ambiante, la contenance du système de canalisation et/ou la longueur du système de canalisation.

Selon un aspect de l'invention, le balai d'essuyage est mis en mouvement depuis sa position basse, dès que l'étape a) commence.

Selon un exemple de réalisation de l'invention, l'étape b) est effectuée lorsque le balai d'essuyage a atteint une position intermédiaire prédéterminée, dans une phase de balayage montante. On peut ainsi optimiser la répartition du premier fluide sur le pare-brise en programmant la position intermédiaire du balai d'essuyage à partir de laquelle on arrête d'éjecter du premier fluide sur le pare-brise. Ceci évite d'éjecter du premier fluide lorsque le balai est dans sa position haute, ce fluide étant susceptible de ne pas atteindre le pare-brise dans cette position du balai, et limite ainsi le gaspillage du premier fluide.

Dans la présente demande, on entend par phase de balayage montante, une phase de déplacement ou de mise en mouvement du balai depuis sa position basse jusqu'à sa position haute. On entend par phase de balayage descendante, une phase de déplacement ou de mise en mouvement du balai depuis sa position haute jusqu'à sa position basse. Entre ses positions basse et haute, ou haute et basse, le balai adopte une multitude de positions intermédiaires.

Avantageusement, le procédé de lavage comprend, avant l'étape a), une étape préliminaire dans laquelle le système de pompe est activé pour faire circuler du premier fluide dans le système de canalisation. On peut ainsi savoir exactement la quantité de premier fluide présent dans le système de canalisation à la suite de cette étape. Elle vise notamment à remplir le système de canalisation qui pourrait être vide, par exemple du fait de la non utilisation du dispositif depuis un certain temps et l'évaporation du fluide contenu dans le système de canalisation.

Selon un aspect de l'invention, le système de pompe est à l'état désactivé et le balai d'essuyage est en position basse pendant une durée de pause T1 prédéterminée, entre l'étape préliminaire et l'étape a).

Selon un exemple de réalisation, le procédé de lavage comprend, après l'étape b), une étape c) dans laquelle le système de pompe est activé de manière à faire circuler du premier fluide dans le système de canalisation de façon à purger le système de canalisation du deuxième fluide, et une étape d), dans laquelle le système de pompe est désactivé au moment où le premier fluide arrive au niveau des orifices. On effectue ici une deuxième purge qui permet de vider le système de canalisation du deuxième fluide et de le remplir du premier fluide sans pour autant faire sortir du premier fluide des orifices d'éjection. Le procédé de l'invention permet ainsi de continuer d'utiliser du deuxième fluide en le poussant avec le premier fluide de sorte qu'au moment où l'on souhaite utiliser du premier fluide, celui-ci soit déjà à la sortie des orifices. Le deuxième fluide ne sera alors pas gaspillé et le premier fluide pourra être éjecté au moment voulu et à l'endroit voulu sur le pare-brise. Le procédé selon l'invention comprend ainsi deux étapes successives de purge du système de canalisation.

Avantageusement, le procédé de lavage comprend une étape e) de mise en mouvement du balai d'essuyage depuis sa position haute, avant que l'étape c) commence.

Selon un aspect de l'invention, l'étape c) est réalisée à partir du moment où le balai d'essuyage est dans une première position intermédiaire prédéterminée et jusqu'au moment où le balai d'essuyage est dans une deuxième position intermédiaire prédéterminée, dans une même phase de balayage descendante. On prévoit ainsi exactement la durée pendant laquelle on souhaite éjecter le deuxième fluide sur le pare-brise et la zone du pare-brise sur laquelle on souhaite le déposer.

Selon un exemple de réalisation de l'invention, le système de pompe est à l'état désactivé et le balai d'essuyage est en position basse pendant une durée de pause T2 prédéterminée, après la fin de l'étape e). Grâce à cette pause, le deuxième fluide présent sur le pare-brise va pouvoir agir sur les saletés ou sur le givre avant que le balai d'essuyage ne se remette en mouvement.

Avantageusement, le procédé de lavage comprend, après la fin de l'étape e), ou la pause T2, une étape f) d'entraînement du balai d'essuyage depuis sa position basse jusqu'à sa position haute, et depuis sa position haute jusqu'à sa position basse.

Selon un aspect de l'invention, le procédé de lavage comprend, pendant l'étape f), au moins une des étapes suivantes :
- activation du système de pompe pour éjecter du premier fluide par les orifices, entre le moment où le balai d'essuyage est en position basse et le moment où le balai est dans une position intermédiaire prédéterminée, dans une phase de balayage montante,
- activation du système de pompe pour éjecter du premier fluide par les orifices, entre le moment où le balai d'essuyage est en position intermédiaire et le moment où le balai est dans une autre position intermédiaire, dans une phase de balayage montante,
- activation du système de pompe pour éjecter du premier fluide par les orifices, entre le moment où le balai d'essuyage est en position intermédiaire et le moment où le balai est en position haute, dans une phase de balayage montante,
- activation du système de pompe pour éjecter du premier fluide par les orifices, entre le moment où le balai d'essuyage est en position haute et le moment où le balai est dans une position intermédiaire, dans une phase de balayage descendante,
- activation du système de pompe pour éjecter du premier fluide par les orifices, entre le moment où le balai d'essuyage est dans une position intermédiaire et le moment où le balai est dans une autre position intermédiaire,
- activation du système de pompe pour éjecter du premier fluide par les orifices, entre le moment où le balai d'essuyage est dans une position intermédiaire et le moment où le balai est en position basse, dans une phase de balayage descendante, et
- désactivation du système de pompe pendant l'entraînement du balai d'essuyage depuis sa position haute jusqu'à sa position basse, ou depuis sa position basse jusqu'à sa position haute.

Selon un exemple de réalisation de l'invention, le système de pompe est à l'état désactivé et le balai d'essuyage est en position basse pendant une durée de pause T3 prédéterminée, après l'étape f).

Avantageusement, le procédé de lavage comprend, après l'étape f) ou la pause T3, une étape g) d'entraînement du balai d'essuyage depuis sa position basse jusqu'à sa position haute, et depuis sa position haute jusqu'à sa position basse.

Selon un aspect de l'invention, le procédé de lavage comprend, après l'étape g), une étape h) de vérification de l'état de propreté du pare-brise, au moins une partie des étapes précitées du procédé de lavage étant répétées en fonction du résultat obtenu à l'étape h). Ainsi, en fonction de l'état de propreté du pare-brise, il est possible de répéter toutes les étapes du procédé de lavage ou une partie de ces étapes, notamment l'étape c).

Selon un exemple de réalisation, le premier fluide est un fluide de lavage et le deuxième fluide est un fluide antigivre et/ou anti-moustique, ou le premier fluide est un fluide antigivre et/ou anti-moustique et le deuxième fluide est un fluide de lavage. Le fluide antigivre et/ou anti-moustique est plus couteux que le fluide de lavage. Le procédé de l'invention permet ainsi d'utiliser le fluide désiré au bon moment, sans gaspillage, en particulier concernant le fluide antigivre et/ou anti-moustique.

Avantageusement, le système de pompe comprend deux pompes indépendantes, une première pompe associée au premier réservoir et destinée à faire circuler le premier fluide et une deuxième pompe associée au deuxième réservoir et destinée à faire circuler le deuxième fluide.

Selon un aspect de l'invention, les orifices sont situés sur le balai d'essuyage et/ou sur le capot d'un véhicule.

Selon un exemple de réalisation, le ou chaque balai d'essuyage projette du liquide vers le haut du balai. Le ou chaque balai d'essuyage est par exemple monorampe. Les orifices précités d'éjection de fluide peuvent ainsi déboucher ver le haut du ou des balais.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue schématique d'un dispositif de lavage d'un pare-brise de véhicule automobile ;
- la figure 2 est un graphique illustrant différentes étapes d'un mode de réalisation du procédé de lavage de l'invention.
- les figures 3 à 13 sont des vues schématiques du pare-brise et des balais d'essuyage du dispositif de lavage de la figure 1, à différentes étapes du procédé de lavage illustré à la figure 2.

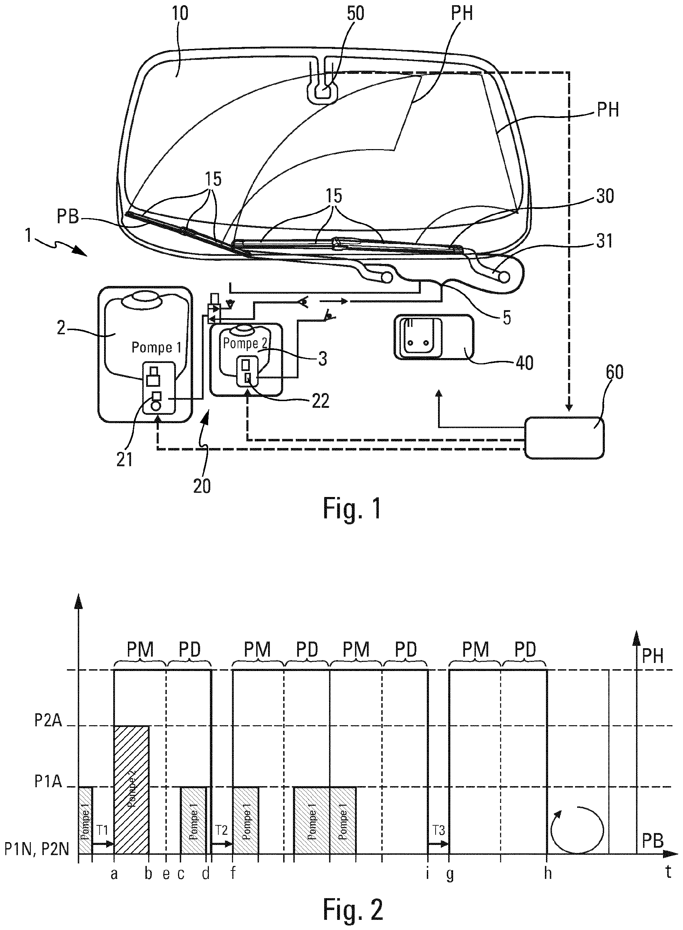

Le procédé de lavage de l'invention utilise un dispositif de lavage 1 appliqué sur un pare-brise 10 de véhicule automobile tel qu'illustré à la figure 1. Un tel dispositif de lavage comprend un premier réservoir 2 contenant un premier fluide et un deuxième réservoir 3 comprenant un deuxième fluide. Le premier fluide est par exemple un liquide nettoyant. Le deuxième fluide est notamment un liquide antigivre et/ou anti-moustique, c'est-à-dire un liquide actif permettant le dégivrage du pare-brise et/ou un nettoyage particulier du pare-brise 10.

Le dispositif de lavage 1 comprend également un système de canalisation 5 reliant le premier réservoir 2 et le deuxième réservoir 3 à des orifices 15 par lesquels sont éjectés du premier fluide et/ou du deuxième fluide sur le pare-brise 10. Il comprend en outre un système de pompe 20 destiné à faire circuler du premier fluide et/ou du deuxième fluide dans le système de canalisation 5 jusqu'à éjection par les orifices 15. Le système de pompe 20 comprend ici deux pompes 21, 22 indépendantes. Une première pompe 21 est associée au premier réservoir 2 et est destinée à faire circuler du premier fluide dans le système de canalisation 5 et une deuxième pompe 22 est associée au deuxième réservoir 3 et est destinée à faire circuler du deuxième fluide dans le système de canalisation 5.

Le dispositif de lavage 1 comprend au moins un balai d'essuyage 30 monté sur un bras 31 et apte à se déplacer sur le pare-brise 10 entre une position basse PB et une position haute PH. Le dispositif de lavage 1 de la figure 1 comprend deux balais d'essuyage 30. Les orifices 15 précités sont par exemple situés sur les balais d'essuyage 30. Ils peuvent également être situés sur le bras 31. Les orifices 15 sont ici disposés de manière à projeter du premier fluide et/ou du deuxième fluide vers le haut des balais d'essuyage 30, c'est-à-dire vers le haut du pare-brise 10.

Le balai d'essuyage 30 est par exemple un balai comprenant au moins une rampe destinée à projeter du liquide vers le haut du balai ou en direction de la position haute PH.

Le dispositif de lavage 1 comprend également un moteur 40 destiné à entrainer les balais d'essuyage 30 entre leurs positions basses et leurs positions hautes respectives. Le dispositif de lavage 1 comprend en outre au moins un capteur 50. Il est situé ici sur une partie haute du pare-brise, au centre de celui-ci. Il est notamment situé au niveau d'une zone du pare-brise 10 balayée par un seul des deux balais d'essuyage 30.

Le dispositif de lavage 1 comprend de plus un boitier électronique 60 capable d'analyser les données issues du capteur 50 et de commander le moteur 40 d'entraînement des balais d'essuyage 30 et l'activation du système de pompe 20, les première et deuxième pompes 21, 22 pouvant être commandées de manière indépendante. Le capteur 50 est par exemple un capteur de pluie, un capteur d'opacité du pare-brise et/ou un capteur de lumière.

La figure 2 illustre un mode de réalisation du procédé de lavage selon l'invention, et représente un graphe dans lequel sont représentés en abscisse, le temps t, et en ordonnées, à la fois l'état des pompes activée(s)/désactivée(s) à gauche sur le dessin (P1A/P1N = première pompe activée/désactivée et P2A/P2N = deuxième pompe activée/désactivée), et la position des balais d'essuyage (PB = position basse et PH = position haute). Les indices PM et PD désignent en outre des phases de balayage montante et descendante, respectivement, des balais d'essuyage 30, c'est-à-dire les phases où les balais sont en mouvement. Ce procédé de lavage est de préférence mis en oeuvre lorsque le véhicule équipé du dispositif de lavage est à l'arrêt.

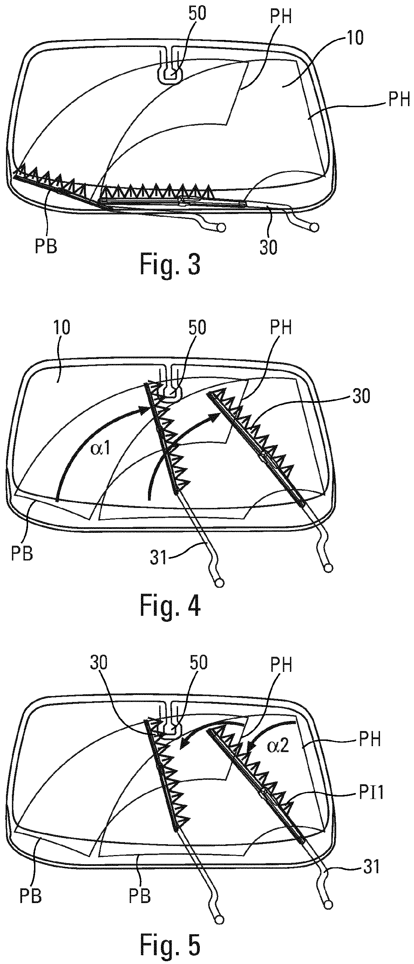

Comme cela est visible aux figures 2 et 3, le procédé comprend une étape préliminaire dans laquelle le système de pompe 20 est activé pour faire circuler du premier fluide dans le système de canalisation 5. On active pour cela la première pompe 21. Cette étape permet de remplir le système de canalisation 5 en premier fluide. La pompe 21 est désactivée dès que du premier fluide commence à être éjecté sur le pare-brise 10 ou au moment où du premier fluide parvient au niveau des orifices 15.

Le procédé comprend ensuite une étape de pause d'une durée T1, pendant laquelle le système de pompe est désactivé et les balais d'essuyage 30 sont au repos.

Le procédé comprend ensuite une étape a) d'activation du système de pompe 20 de manière à faire circuler du deuxième fluide dans le système de canalisation 5 et à purger le système de canalisation 5 du premier fluide (figures 2 et 4). On comprend ici que c'est la deuxième pompe 22 qui est activée pour remplir le système de canalisation 5 en deuxième fluide et chasser le premier fluide contenu dans le système de canalisation, jusqu'à son éjection sur le pare-brise 10. Le procédé comprend en outre une étape b) de désactivation de la pompe 22 au moment où le deuxième fluide arrive au niveau des orifices 15. Le système de canalisation 5 est alors rempli en deuxième fluide, du deuxième fluide étant situé dans le système de canalisation 5 jusqu'au niveau des orifices 15 de sorte que le système 5 soit totalement purgé du premier fluide. Plusieurs paramètres peuvent être pris en considération pour déterminer le moment où la purge est terminée, comme par exemple le débit de la pompe 22, la viscosité des fluides, la température ambiante, la contenance du système de canalisation et/ou la longueur de ce dernier.

L'activation de la pompe 22 à l'étape a) est réalisée simultanément à la mise en mouvement des balais d'essuyage 30, qui étaient chacun en position de repos ou basse PB, comme cela est visible en figure 3.

L'étape b) (désactivation de la pompe 22) est effectuée lorsque les balais d'essuyage 30 ont atteint des positions intermédiaires prédéterminées, dans une phase de balayage montante. Dans ces positions intermédiaires représentées en figure 4, les balais d'essuyage ont chacun été entrainés (en rotation autour de leurs axes d'articulation) selon un angle α1, mesuré depuis les positions basses PB, qui est inférieur à l'angle maximal de rotation de chacun des balais lorsqu'ils sont entraînés de leurs positions basses PB à leurs positions hautes PH. Le réglage de l'angle α1 permet de régler avec précision la zone sur laquelle on désire déposer du premier fluide et la quantité déposée de premier fluide. Lorsque les balais d'essuyage ont chacun été entrainés selon l'angle α1, ils se trouvent par exemple à 10° de leurs positions hautes respectives. L'angle α1 peut être spécifique à chacun des balais d'essuyage 30 du dispositif de lavage, en particulier si les angles maximaux précités (angles entre les positions basses et hautes) sont différents d'un balai d'essuyage à l'autre du même dispositif de lavage.

Bien que la pompe 22 soit désactivée, les balais d'essuyage 30 poursuivent leurs courses jusqu'à leurs positions hautes PH. Ils sont ensuite entraînés depuis leurs positions hautes jusqu'à leurs positions basses PB (étape e)), comme illustré sur les figures 2, 5 et 6. Pendant cette phase de balayage descendante, le procédé de l'invention comprend une étape c) dans laquelle le système de pompe 20 est activé de manière à faire circuler du premier fluide dans le système de canalisation 5 de façon à purger le système de canalisation du deuxième fluide. On comprend donc ici que c'est la première pompe 21 qui est activée pour remplir le système de canalisation 5 avec du premier fluide et éjecter de la sorte le deuxième fluide contenu dans le système de canalisation 5 sur le pare-brise.

Le procédé comprend également une étape d) dans laquelle la pompe 21 est désactivée au moment où du premier fluide arrive au niveau des orifices 15. De la même manière qu'expliqué précédemment, le deuxième fluide est ainsi chassé du système de canalisation 5 qui ne comprend donc plus que du premier fluide, qui s'étend dans le système de canalisation 5 jusqu'au niveau des orifices d'éjection 15.

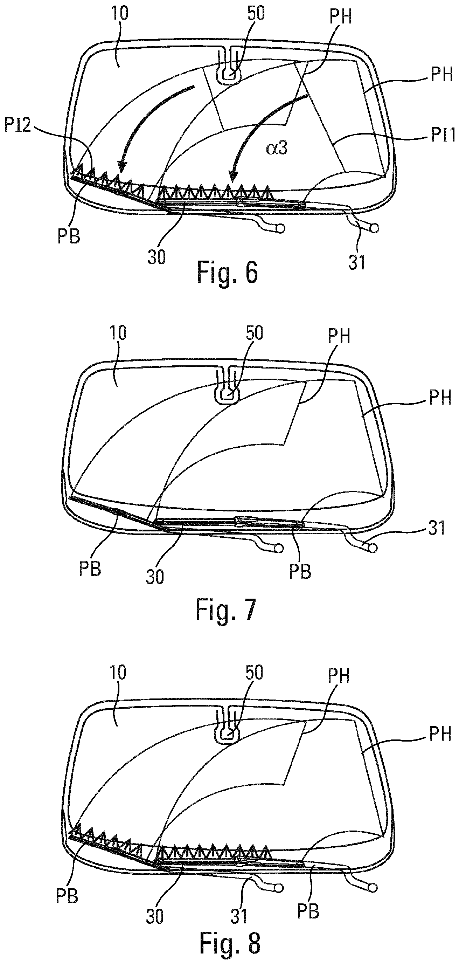

On remarque sur les figures 2, 5 et 6 que l'étape c) est réalisée à partir du moment où les balais d'essuyage 30 sont dans des premières positions intermédiaires PI1 prédéterminées et jusqu'au moment où les balais d'essuyage sont dans des deuxièmes positions intermédiaires PI2 prédéterminées, dans une même phase de balayage descendante. Dans les premières positions intermédiaires représentées en figure 5, les balais d'essuyage 30 ont chacun été entrainés selon un angle α2 mesuré depuis leurs positions hautes PH et, dans les deuxièmes positions intermédiaires représentées en figure 6, les balais d'essuyage 30 ont chacun été entrainés selon un angle α3 mesuré depuis leurs positions hautes PH. α3 est supérieur à α2 (par rapport aux positions hautes) du fait que les balais parviennent à ces positions dans une même phase de balayage descendante et que les balais atteignent les premières positions intermédiaires aux angles α2 avant les deuxièmes positions intermédiaires aux angles α3. On peut remarquer sur la figure 2 notamment que l'étape d) (désactivation de la pompe 21) intervient alors que les balais d'essuyage n'ont pas encore atteint leurs positions basses PB. Comme expliqué dans ce qui précède, le réglage des angles α2 et α3 permet de régler avec précision la zone sur laquelle on désire déposer du deuxième fluide et la quantité déposée de deuxième fluide. De plus, les angles α2 et α3 propres à un balai d'essuyage peuvent être différents des angles α2 et α3 propres à l'autre balai du dispositif de lavage, comme expliqué précédemment. A titre d'exemple, l'angle α2 est égal à 10° et lorsque les balais d'essuyages ont été entrainés selon l'angle α3, ils se trouvent par exemple à 10° de leurs positions basses.

Les balais d'essuyage parviennent ensuite à leurs positions basses PB et sont laissés dans cette position pendant une durée de pause T2 prédéterminée, comme illustré sur les figures 2 et 7. Le système de pompe 20 est à l'état désactivé pendant la durée T2. Ainsi, le deuxième fluide est laissé sur le pare-brise 10 pendant cette durée de pause T2 de sorte qu'il ait le temps d'agir, notamment sur la saleté et/ou le givre. Cette durée T2 est par exemple de quelques secondes.

Comme illustré sur les figures 2 et 8 à 10 le procédé de lavage de l'invention comprend, après la pause précitée, une étape f) d'entraînement des balais d'essuyage 30 depuis leurs positions basses PB jusqu'à leurs positions hautes PH, et depuis leurs positions hautes PH jusqu'à leurs positions basses PB.

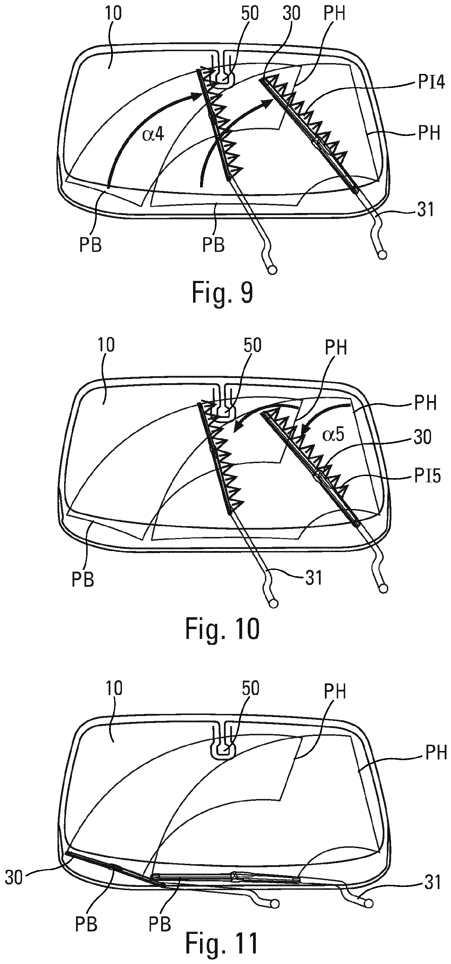

Durant cette étape f), le procédé de lavage comprend une sous-étape (figures 8 et 9) d'activation du système de pompe 20, ici la première pompe 21, pour éjecter du premier fluide par les orifices 15, entre le moment où les balais d'essuyage sont dans leurs positions basses PB et le moment où les balais d'essuyage sont dans des positions intermédiaires prédéterminées PI4. Dans ces positions PI4, les balais d'essuyage ont chacun été entrainés sur le pare-brise selon un angle α4, mesuré depuis leurs positions basses PB et inférieurs aux angles maximaux précités (angles entre les positions basses et hautes). Le système de pompe est alors désactivé au moment où les balais atteignent les positions intermédiaires prédéterminées PI4. Lorsque les balais d'essuyage ont chacun été entrainés selon l'angle α4, ils se trouvent par exemple à 10° de leurs positions hautes.

Après avoir atteint leurs positions hautes PH, et lors d'une phase successive de balayage descendante es balais, le procédé de lavage peut comprendre une autre sous-étape (figure 10) d'activation du système de pompe 20, ici la première pompe 21, pour éjecter du premier fluide par les orifices 15, entre le moment où les balais d'essuyage sont dans des positions intermédiaires prédéterminées PI5 et le moment où les balais sont dans leurs positions basses PB. Dans les positions intermédiaires prédéterminées PI5, les balais d'essuyage ont chacun été entrainés sur le pare-brise selon un angle α5 mesuré depuis leurs positions hautes PH et inférieur aux angles maximaux précités (angles entre les positions basses et hautes). L'angle α5 est par exemple sensiblement égal à 10°.

Le procédé de lavage peut également comprendre une étape ultérieure d'entraînement des balais d'essuyage 30 depuis leurs positions basses PB jusqu'à leurs positions hautes PH, et depuis leurs positions hautes PH jusqu'à leurs positions basses PH. Durant cette étape, le procédé de lavage comprend une sous-étape (figure 2) d'activation du système de pompe 20, ici la première pompe 21, pour éjecter du premier fluide par les orifices 15, entre le moment où les balais d'essuyage est dans leurs positions basses PB et le moment où ils sont dans des positions intermédiaires prédéterminées. Le système de pompe est à l'état désactivé à partir du moment où les balais d'essuyage atteignent ces positions intermédiaires et également pendant que les balais d'essuyage passent de leurs positions hautes à leurs positions basses.

Comme illustré à la figure 11, le procédé comprend en outre, après la fin de l'étape f), une étape i) dans laquelle le système de pompe est désactivé et les balais d'essuyage sont dans leurs positions basses PB pendant une durée de pause T3 prédéterminée. La durée de T3 est par exemple de quelques secondes.

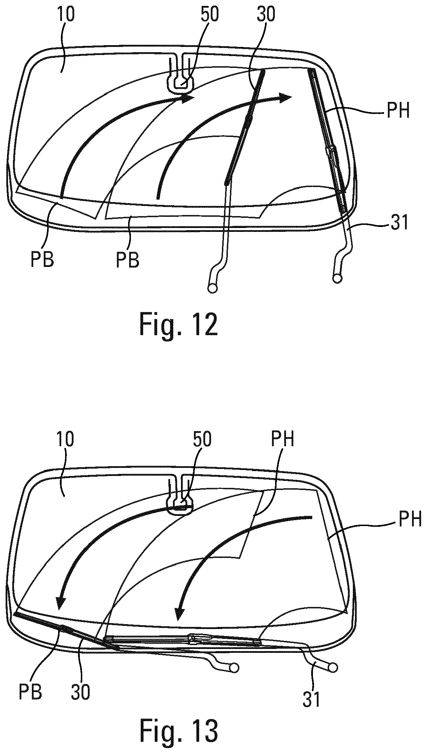

Le procédé de lavage comprend ensuite, comme illustré sur les figure 12 et 13, après l'étape i), une étape g) d'entraînement des balais d'essuyage 30 depuis leurs positions basses jusqu'à leurs positions hautes, et depuis leurs positions hautes jusqu'à leurs positions basses. Le système de pompe est désactivé pendant cette étape. Cette étape permet notamment d'essuyer le pare-brise pour enlever les résidus de fluides et/ou de saletés qui pourraient encore se trouver sur le pare-brise.

Le procédé de lavage comprend, enfin après l'étape g), une étape h) de vérification de l'état de propreté du pare-brise, par l'intermédiaire du ou des capteurs 50, au moins une partie des étapes précitées du procédé de lavage peuvent être répétée en fonction du résultat obtenu à l'étape h).

De manière générale, les paramètres α1, α2, α3, α4, α5, T1, T2 et/ou T3 sont déterminés de façon à optimiser la consommation en fluides du dispositif, ainsi que la durée du cycle ou procédé de lavage, et en conséquence d'améliorer l'efficacité du nettoyage.

## Revendications

1. Procédé de lavage d'un pare-brise (10) de véhicule automobile par utilisation d'un dispositif de lavage (1) comprenant :
- un premier réservoir (2) contenant un premier fluide et un deuxième réservoir (3) comprenant un deuxième fluide,
- un système de canalisation (5) reliant le premier réservoir (2) et le deuxième réservoir (3) à des orifices (15) par lesquels sont éjectés le premier fluide et/ou le deuxième fluide sur le pare-brise (10),
- un système de pompe (20) destiné à faire circuler le premier fluide et/ou le deuxième fluide dans le système de canalisation (5) jusqu'à éjection par lesdits orifices (15), et
- au moins un balai d'essuyage (30) apte à se déplacer sur le pare-brise (10) entre une position basse (PB) et une position haute (PH),
**caractérisé en ce que**, le système de canalisation (5) contenant du premier fluide, le procédé comprend les étapes :
a) d'activation du système de pompe (20) de manière à faire circuler du deuxième fluide dans le système de canalisation (5) de façon à purger le système de canalisation (5) du premier fluide, et
b) désactivation du système de pompe (20) au moment où le deuxième fluide arrive au niveau des orifices (15).

2. Procédé de lavage selon la revendication 1, **caractérisé en ce que** le balai d'essuyage (30) est mis en mouvement depuis sa position basse (PB), dès que l'étape a) commence.

3. Procédé de lavage selon la revendication 2, **caractérisé en ce que** l'étape b) est effectuée lorsque le balai d'essuyage (30) a atteint une position intermédiaire prédéterminée, dans une phase de balayage montante.

4. Procédé de lavage selon l'une quelconque des revendications précédentes, **caractérisé en ce qu'**il comprend, avant l'étape a), une étape préliminaire dans laquelle le système de pompe (20) est activé pour faire circuler du premier fluide dans le système de canalisation (5).

5. Procédé de lavage selon la revendication 4, **caractérisé en ce que** le système de pompe (20) est à l'état désactivé et le balai d'essuyage (30) est en position basse (PB) pendant une durée de pause T1 prédéterminée, entre l'étape préliminaire et l'étape a).

6. Procédé de lavage selon l'une quelconque des revendications précédentes, **caractérisé en ce qu'**il comprend, après l'étape b), une étape c) dans laquelle le système de pompe (20) est activé de manière à faire circuler du premier fluide dans le système de canalisation (5) de façon à purger le système de canalisation (5) du deuxième fluide, et une étape d), dans laquelle le système de pompe (5) est désactivé au moment où le premier fluide arrive au niveau des orifices (15).

7. Procédé de lavage selon la revendication 6, **caractérisé en ce qu'**il comprend une étape e) de mise en mouvement du balai d'essuyage (30) depuis sa position haute (PH), avant que l'étape c) commence.

8. Procédé de lavage selon la revendication 7, **caractérisé en ce que** l'étape c) est réalisée à partir du moment où le balai d'essuyage (30) est dans une première position intermédiaire prédéterminée et jusqu'au moment où le balai d'essuyage (30) est dans une deuxième position intermédiaire prédéterminée, dans une même phase de balayage descendante.

9. Procédé de lavage selon la revendication 7 ou 8, **caractérisé en ce que** le système de pompe (20) est à l'état désactivé et le balai d'essuyage (30) est en position basse (PB) pendant une durée de pause T2 prédéterminée, après la fin de l'étape e).

10. Procédé de lavage selon l'une des revendications 7 à 9, **caractérisé en ce qu'**il comprend, après la fin de l'étape e) ou la pause T2, une étape f) d'entraînement du balai d'essuyage (30) depuis sa position basse (PB) jusqu'à sa position haute (PH), et depuis sa position haute (PH) jusqu'à sa position basse (PB).

11. Procédé de lavage selon la revendication 10, **caractérisé en ce qu'**il comprend, pendant l'étape f), au moins une des étapes suivantes :
- activation du système de pompe (20) pour éjecter du premier fluide par les orifices (15), entre le moment où le balai d'essuyage (30) est en position basse (PB) et le moment où le balai (30) est dans une position intermédiaire prédéterminée, dans une phase de balayage montante,
- activation du système de pompe (20) pour éjecter du premier fluide par les orifices (15), entre le moment où le balai d'essuyage (30) est en position intermédiaire et le moment où le balai (30) est dans une autre position intermédiaire, dans une phase de balayage montante,
- activation du système de pompe (20) pour éjecter du premier fluide par les orifices (15), entre le moment où le balai d'essuyage (30) est en position intermédiaire et le moment où le balai (30) est en position haute (PH), dans une phase de balayage montante,
- activation du système de pompe (20) pour éjecter du premier fluide par les orifices (15), entre le moment où le balai d'essuyage (30) est en position haute (PH) et le moment où le balai (30) est dans une position intermédiaire, dans une phase de balayage descendante,
- activation du système de pompe (20) pour éjecter du premier fluide par les orifices (15), entre le moment où le balai d'essuyage (30) est dans une position intermédiaire et le moment où le balai (30) est dans une autre position intermédiaire,
- activation du système de pompe (20) pour éjecter du premier fluide par les orifices (15), entre le moment où le balai d'essuyage (30) est dans une position intermédiaire et le moment où le balai (30) est en position basse (PB), dans une phase de balayage descendante, et
- désactivation du système de pompe (20) pendant l'entraînement du balai d'essuyage (30) depuis sa position haute (PH) jusqu'à sa position basse (PB), ou depuis sa position basse (PB) jusqu'à sa position haute (PH).

12. Procédé de lavage selon la revendication 11, **caractérisé en ce que** le système de pompe (20) est à l'état désactivé et le balai d'essuyage (30) est en position basse (PB) pendant une durée de pause T3 prédéterminée, après l'étape f).

13. Procédé de lavage selon la revendication 11 ou 12, **caractérisé en ce que** qu'il comprend, après l'étape f) ou la pause T3, une étape g) d'entraînement du balai d'essuyage (30) depuis sa position basse (PB) jusqu'à sa position haute (PH), et depuis sa position haute (PH) jusqu'à sa position basse (PB).

14. Procédé de lavage selon la revendication 13, **caractérisé en ce que** qu'il comprend, après l'étape g), une étape h) de vérification de l'état de propreté du pare-brise (10), au moins une partie des étapes précitées du procédé de lavage étant répétées en fonction du résultat obtenu à l'étape h).

15. Procédé selon l'une quelconque des revendications précédentes, **caractérisé en ce que** le premier fluide est un fluide de lavage et le deuxième fluide est un fluide antigivre et/ou anti-moustique, ou le premier fluide est un fluide antigivre et/ou anti-moustique et le deuxième fluide est un fluide de lavage.

16. Procédé de lavage selon l'une des revendications précédentes, **caractérisé en ce que** le système de pompe comprend deux pompes indépendantes, une première pompe associée au premier réservoir et destinée à faire circuler le premier fluide et une deuxième pompe associée au deuxième réservoir et destinée à faire circuler le deuxième fluide.

17. Procédé de lavage selon l'une quelconque des revendications précédentes, **caractérisé en ce que** le ou chaque balai d'essuyage (30) projette du liquide vers le haut du balai.

## Patentansprüche

1. Verfahren zum Waschen einer Windschutzscheibe (10) eines Kraftfahrzeugs durch Verwendung einer Waschvorrichtung (1), umfassend:
- einen ersten Behälter (2), der eine erste Flüssigkeit enthält, und einen zweiten Behälter (3), der eine zweite Flüssigkeit enthält,
- ein Leitungssystem (5), das den ersten Behälter (2) und den zweiten Behälter (3) mit Öffnungen (15) verbindet, durch die die erste Flüssigkeit und/oder die zweite Flüssigkeit auf die Windschutzscheibe (10) ausgestoßen wird/werden,
- ein Pumpensystem (20), das dazu bestimmt ist, die erste Flüssigkeit und/oder die zweite Flüssigkeit in dem Leitungssystem (5) bis zu dem Ausstoßen durch die Öffnungen (15) zirkulieren zu lassen, und
- mindestens ein Scheibenwischerblatt (30), das geeignet ist, auf der Windschutzscheibe (10) zwischen einer unteren Position (PB) und einer oberen Position (PH) verschoben zu werden,
**dadurch gekennzeichnet, dass** das Verfahren die folgenden Schritte aufweist, wobei das Leitungssystem (5) erste Flüssigkeit enthält:
a) Aktivieren des Pumpensystems (20) derart, um zweite Flüssigkeit in dem Leitungssystem (5) derart zirkulieren zu lassen, um das Leitungssystem (5) von der ersten Flüssigkeit zu reinigen, und
b) Deaktivieren des Pumpensystems (20) zu dem Zeitpunkt, an dem die zweite Flüssigkeit an den Öffnungen (15) ankommt.

2. Verfahren zum Waschen nach Anspruch 1, **dadurch gekennzeichnet, dass** das Scheibenwischerblatt (30) von seiner unteren Position (PB) in Bewegung gesetzt wird, sobald der Schritt a) beginnt.

3. Verfahren zum Waschen nach Anspruch 2, **dadurch gekennzeichnet, dass** der Schritt b) durchgeführt wird, wenn das Scheibenwischerblatt (30) in einer sich aufwärts bewegenden Wischphase eine vorbestimmte Zwischenposition erreicht hat.

4. Verfahren zum Waschen nach einem der vorhergehenden Ansprüche, **dadurch gekennzeichnet, dass** es vor dem Schritt a) einen Vorbereitungsschritt aufweist, bei dem das Pumpensystem (20) aktiviert wird, um erste Flüssigkeit in dem Leitungssystem (5) zirkulieren zu lassen.

5. Verfahren zum Waschen nach Anspruch 4, **dadurch gekennzeichnet, dass** sich zwischen dem Vorbereitungsschritt und dem Schritt a) das Pumpensystem (20) im deaktivierten Zustand befindet und sich das Scheibenwischerblatt (30) während einer vorbestimmten Pausendauer T1 in der unteren Position (PB) befindet.

6. Verfahren zum Waschen nach einem der vorhergehenden Ansprüche, **dadurch gekennzeichnet, dass** es nach dem Schritt b) einen Schritt c), bei dem das Pumpensystem (20) derart aktiviert wird, um erste Flüssigkeit in dem Leitungssystem (5) derart zirkulieren zu lassen, um das Leitungssystem (5) von der zweiten Flüssigkeit zu reinigen, und einen Schritt d) aufweist, bei dem das Pumpensystem (5) zu dem Zeitpunkt, an dem die erste Flüssigkeit an den Öffnungen (15) ankommt, deaktiviert wird.

7. Verfahren zum Waschen nach Anspruch 6, **dadurch gekennzeichnet, dass** es einen Schritt e) des Inbewegungsetzens des Scheibenwischerblattes (30) von seiner oberen Position (PH) aufweist, bevor der Schritt c) beginnt.

8. Verfahren zum Waschen nach Anspruch 7, **dadurch gekennzeichnet, dass** der Schritt c) ab dem Zeitpunkt durchgeführt wird, zu dem sich das Scheibenwischerblatt (30) in einer ersten vorbestimmten Zwischenposition befindet, und bis zu dem Zeitpunkt, zu dem sich das Scheibenwischerblatt (30) in einer zweiten vorbestimmten Zwischenposition in einer gleichen sich abwärts bewegenden Wischphase befindet.

9. Verfahren zum Waschen nach Anspruch 7 oder 8, **dadurch gekennzeichnet, dass** sich das Pumpensystem (20) nach dem Ende des Schrittes e) im deaktivierten Zustand befindet und sich das Scheibenwischerblatt (30) während einer vorbestimmten Pausendauer T2 in der unteren Position (PB) befindet.

10. Verfahren zum Waschen nach einem der Ansprüche 7 bis 9, **dadurch gekennzeichnet, dass** es nach dem Ende des Schrittes e) oder der Pause T2 einen Schritt f) des Antreibens des Scheibenwischerblattes (30) von seiner unteren Position (PB) bis zu seiner oberen Position (PH) und von seiner oberen Position (PH) bis zu seiner unteren Position (PB) aufweist.

11. Verfahren zum Waschen nach Anspruch 10, **dadurch gekennzeichnet, dass** es während des Schrittes f) mindestens einen der folgenden Schritte aufweist:
- Aktivieren des Pumpensystems (20), um erste Flüssigkeit durch die Öffnungen (15) zwischen dem Zeitpunkt, zu dem sich das Scheibenwischerblatt (30) in der unteren Position (PB) befindet, und dem Zeitpunkt, zu dem sich das Wischerblatt (30) in einer vorbestimmten Zwischenposition in einer sich aufwärts bewegenden Wischphase befindet, auszustoßen,
- Aktivieren des Pumpensystems (20), um erste Flüssigkeit durch die Öffnungen (15) zwischen dem Zeitpunkt, zu dem sich das Scheibenwischerblatt (30) in der Zwischenposition befindet, und dem Zeitpunkt, zu dem sich das Wischerblatt (30) in einer anderen Zwischenposition in einer sich aufwärts bewegenden Wischphase befindet, auszustoßen,
- Aktivieren des Pumpensystems (20), um erste Flüssigkeit durch die Öffnungen (15) zwischen dem Zeitpunkt, zu dem sich das Scheibenwischerblatt (30) in der Zwischenposition befindet, und dem Zeitpunkt, zu dem sich das Wischerblatt (30) in der oberen Position (PH) in einer sich aufwärts bewegenden Wischphase befindet, auszustoßen,
- Aktivieren des Pumpensystems (20), um erste Flüssigkeit durch die Öffnungen (15) zwischen dem Zeitpunkt, zu dem sich das Scheibenwischerblatt (30) in der oberen Position (PH) befindet, und dem Zeitpunkt, zu dem sich das Wischerblatt (30) in einer Zwischenposition in einer sich abwärts bewegenden Wischphase befindet, auszustoßen,
- Aktivieren des Pumpensystems (20), um erste Flüssigkeit durch die Öffnungen (15) zwischen dem Zeitpunkt, zu dem sich das Scheibenwischerblatt (30) in einer Zwischenposition befindet, und dem Zeitpunkt, zu dem sich das Wischerblatt (30) in einer anderen Zwischenposition befindet, auszustoßen,
- Aktivieren des Pumpensystems (20), um erste Flüssigkeit durch die Öffnungen (15) zwischen dem Zeitpunkt, zu dem sich das Scheibenwischerblatt (30) in einer Zwischenposition befindet, und dem Zeitpunkt, zu dem sich das Wischerblatt (30) in der unteren Position (PB) in einer sich abwärts bewegenden Wischphase befindet, auszustoßen, und
- Deaktivieren des Pumpensystems (20) während des Antreibens des Scheibenwischerblattes (30) von seiner oberen Position (PH) bis zu seiner unteren Position (PB) oder von seiner unteren Position (PB) bis zu seiner oberen Position (PH).

12. Verfahren zum Waschen nach Anspruch 11, **dadurch gekennzeichnet, dass** sich das Pumpensystem (20) nach dem Schritt f) im deaktivierten Zustand befindet und sich das Scheibenwischerblatt (30) während einer vorbestimmten Pausendauer T3 in der unteren Position (PB) befindet.

13. Verfahren zum Waschen nach Anspruch 11 oder 12, **dadurch gekennzeichnet, dass** es nach dem Schritt f) oder der Pause T3 einen Schritt g) des Antreibens des Scheibenwischerblattes (30) von seiner unteren Position (PB) bis zu seiner oberen Position (PH) und von seiner oberen Position (PH) bis zu seiner unteren Position (PB) aufweist.

14. Verfahren zum Waschen nach Anspruch 13, **dadurch gekennzeichnet, dass** es nach dem Schritt g) einen Schritt h) des Überprüfens des Sauberkeitszustands der Windschutzscheibe (10) aufweist, wobei mindestens ein Teil der vorgenannten Schritte des Verfahrens zum Waschen in Abhängigkeit von dem Ergebnis, das bei dem Schritt h) erhalten wird, wiederholt wird.

15. Verfahren nach einem der vorhergehenden Ansprüche, **dadurch gekennzeichnet, dass** die erste Flüssigkeit eine Waschflüssigkeit ist und die zweite Flüssigkeit eine Frostschutz- und/oder Antimückenflüssigkeit ist oder die erste Flüssigkeit eine Frostschutz- und/oder Antimückenflüssigkeit ist und die zweite Flüssigkeit eine Waschflüssigkeit ist.

16. Verfahren zum Waschen nach einem der vorhergehenden Ansprüche, **dadurch gekennzeichnet, dass** das Pumpensystem zwei unabhängige Pumpen aufweist, eine erste Pumpe, die mit dem ersten Behälter verbunden ist und dazu bestimmt ist, die erste Flüssigkeit zirkulieren zu lassen, und eine zweite Pumpe, die mit dem zweiten Behälter verbunden ist und dazu bestimmt ist, die zweite Flüssigkeit zirkulieren zu lassen.

17. Verfahren zum Waschen nach einem der vorhergehenden Ansprüche, **dadurch gekennzeichnet, dass** das oder jedes Scheibenwischerblatt (30) Flüssigkeit zur Oberseite des Wischerblattes spritzt.

## Claims

1. A method for washing a motor vehicle windscreen (10) by means of use of a washing device (1) comprising:
- a first reservoir (2) containing a first fluid, and a second reservoir (3) comprising a second fluid;
- a piping system (5) which connects the first reservoir (2) and the second reservoir (3) to orifices (15) via which the first fluid and/or the second fluid is/are ejected onto the windscreen (10) ;
- a pump system (20) which is designed to circulate the first fluid and/or the second fluid in the piping system (5) until ejection via said orifices (15) takes place; and
- at least one wiper blade (30) which can be displaced on the windscreen (10), between a low position (PB) and a high position (PH), **characterized in that**, with the piping system (5) containing first fluid, the method comprises the steps of:
a) activation of the pump system (20), so as to circulate second fluid in the piping system (5), so as to purge the first fluid from the piping system (5); and
b) deactivation of the pump system (20) at the moment when the second fluid reaches the orifices (15).

2. The washing method as claimed in claim 1, **characterized in that** the wiper blade (30) is put into motion from its low position (PB) as soon as the step a) begins.

3. The washing method as claimed in claim 2, **characterized in that** the step b) is carried out when the wiper blade (30) has reached a predetermined intermediate position, in a rising wiping phase.

4. The washing method as claimed in any one of the preceding claims, **characterized in that** before the step a), it comprises a preliminary step in which the pump system (20) is activated in order to circulate first fluid in the piping system (5).

5. The washing method as claimed in claim 4, **characterized in that** the pump system (20) is in the deactivated state and the wiper blade (30) is in the low position (PB) for a predetermined pause period T1, between the preliminary step and the step a).

6. The washing method as claimed in any one of the preceding claims, **characterized in that**, after the step b), it comprises a step c) in which the pump system (20) is activated, so as to circulate first fluid in the piping system (5), so as to purge the second fluid from the piping system (5), and a step d) in which the pump system (5) is deactivated at the moment when the first fluid reaches the orifices (15).

7. The washing method as claimed in claim 6, **characterized in that** it comprises a step e) of putting the wiper blade (30) into motion from its high position (PH), before the step c) begins.

8. The washing method as claimed in claim 7, **characterized in that** the step c) is carried out starting from the moment when the wiper blade (30) is in a first predetermined intermediate position, and until the moment when the wiper blade (30) is in a second predetermined intermediate position, in the same phase of descending wiping.

9. The washing method as claimed in claim 7 or 8, **characterized in that** the pump system (20) is in the deactivated state and the wiper blade (30) is in the low position (PB) for a predetermined pause period T2, after the end of the step e).

10. The washing method as claimed in one of claims 7 to 9, **characterized in that**, after the end of the step e), or the pause T2, it comprises a step f) of driving the wiper blade (30) from its low position (PB) to its high position (PH), and from its high position (PH) to its low position (PB).

11. The washing method as claimed in claim 10, **characterized in that**, during the step f), it comprises at least one of the following steps:
- activation of the pump system (20), in order to eject first fluid via the orifices (15), between the moment when the wiper blade (30) is in the low position (PB) and the moment when the blade (30) is in a predetermined intermediate position, in a rising wiping phase;
- activation of the pump system (20), in order to eject first fluid via the orifices (15), between the moment when the wiper blade (30) is in an intermediate position and the moment when the blade (30) is in another intermediate position, in a rising wiping phase;
- activation of the pump system (20) in order to eject first fluid via the orifices (15), between the moment when the wiper blade (30) is in an intermediate position and the moment when the blade (30) is in the high position (PH), in a rising wiping phase;
- activation of the pump system (20) in order to eject first fluid via the orifices (15), between the moment when the wiper blade (30) is in the high position (PH) and the moment when the blade (30) is in an intermediate position, in a descending wiping phase;
- activation of the pump system (20) in order to eject first fluid via the orifices (15), between the moment when the wiper blade (30) is in an intermediate position and the moment when the blade (30) is in another intermediate position;
- activation of the pump system (20) in order to eject first fluid via the orifices (15), between the moment when the wiper blade (30) is in an intermediate position and the moment when the blade (30) is in the low position (PB), in a descending wiping phase; and
- deactivation of the pump system (20) during driving of the wiper blade (30) from its high position (PH) to its low position (PB), or from its low position (PB) to its high position (PH).

12. The washing method as claimed in claim 11, **characterized in that** the pump system (20) is in the deactivated state, and the wiper blade (30) is in the low position (PB), for a predetermined pause period T3 after the step f).

13. The washing method as claimed in claim 11 or 12, **characterized in that**, after the step f) or the pause T3, it comprises a step g) of driving the wiper blade (30) from its low position (PB) to its high position (PH), and from its high position (PH) to its low position (PB).

14. The washing method as claimed in claim 13, **characterized in that**, after the step g), it comprises a step h) of checking the state of cleanliness of the windscreen (10), at least some of the aforementioned steps of the washing method being repeated according to the result obtained in the step h).

15. The method as claimed in any one of the preceding claims, **characterized in that** the first fluid is a washing fluid and the second fluid is a de-icing and/or anti-insect fluid, or the first fluid is a de-icing and/or anti-insect fluid and the second fluid is a washing fluid.

16. The washing method as claimed in one of the preceding claims, **characterized in that** the pump system comprises two independent pumps, i.e. a first pump which is associated with the first reservoir and is designed to circulate the first fluid, and a second pump which is associated with the second reservoir and is designed to circulate the second fluid.

17. The washing method as claimed in any one of the preceding claims, **characterized in that** the, or each, wiper blade (30) sprays liquid towards the top of the blade.
